# EUROPEAN PATENT APPLICATION

(11) **EP 0 710 043 A1**
(43) Date of publication of application: **01.05.1996**
(21) Application number: 94307978.0
(22) Date of filing: 28.10.1994
(51) Int. Cl.: H04Q 7/34

(54) **A method of monitoring a cellular mobile radio system to derive location area information**

(71) Applicant: Hewlett-Packard Company, Palo Alto, California 94304 (US)
(72) Inventor: Brown, Richard, Stoke Gifford, Bristol BS12 6RP (GB)
(74) Representative: Squibbs, Robert Francis

(57) **Abstract**

A method is provided for deriving information about location areas in a cellular mobile radio system that comprises a fixed part providing radio coverage in a plurality of cells logically grouped into location areas, and mobile stations for communicating with the fixed part of the system. In such systems, each mobile station passes location update messages to the fixed part of the system, at least upon changing location areas, to enable the fixed part to keep track of the mobile stations. The present method involves monitoring these location update messages to extract location-area related data, and then combining (30, 31, 32) the data extracted from many such messages to produce location-area related information such as lists of cells (35) making up each location area, the identity of gateway cells in each location area, lists (36) of adjacent location areas, and the identity of the most used location areas.

## Description

### Technical Field

The present invention relates to the derivation of information about location areas in cellular mobile radio systems such as systems operating according to the GSM or DCS1800 standards. For convenience, systems operating according to the GSM and DCS1800 standards, including derivatives thereof, will hereinafter be referred to as "GSM-type" systems, DCS1800 systems themselves being derivative of GSM systems and exhibiting the same characteristics for present purposes; it should, however, be noted that the present invention is not restricted to GSM-type systems.

### Background Art

A modem cellular mobile radio system, such as a GSM-type system, comprises a fixed part providing radio coverage in a plurality of cells logically grouped into location areas, and mobile stations for communicating with the fixed part of the system. In order to enable the fixed part of the system to locate a mobile station for the purpose of passing a new call to that mobile, the fixed system part keeps track of the current location area of each mobile station making use of the system. Of course, as a mobile station roams about within the coverage area of system, it will change location area. The mobile station is able to recognise when this occurs because it listens to the cell-specific broadcast messages made by the system; these messages include the identity of the current location area in which the mobile station finds itself and the mobile station compares this current location-area identity with a stored record of the location area where it believed itself to be. In the event of the mobile station detecting a discrepancy between the braodacast location-area identity and its stored record, it will transmit a location update request message to the fixed part of the system, enabling the latter to update its record of the location of the mobile station.

Information regarding the topology of cells and location areas, such as which cells belong to which location areas and which location areas are adjacent, can be assembled from the structural configuration of the system. However, this requires operator action with the result that there is no guarentee that the assembled information is up-to-date; in particular, changes made to the system may not be incorporated into the assembled information, or more likely, there will be a significant delay in providing and introducing this information.

Furthermore, certain location-area related information cannot be derived from static configuration data, such information including information about the population (in terms of the number of mobile stations) of different location areas and which cells form "gateway cells" through which mobile stations enter or leave particular location areas.

It is an object of the present invention to provide a method by which up-to-date location-area related information can be derived.

### Summary of the Invention

According to one aspect of the present invention, there is provided a monitoring method for a cellular mobile radio system that comprises a fixed part providing radio coverage in a plurality of cells logically grouped into location areas, and mobile stations for communicating with the fixed part of the system, each mobile station being operative to pass location update messages to the fixed part at least upon changing location areas; the method involving:
-- monitoring the location update messages to extract location-area related data from each of at least some of the messages,
-- combining the location-area related data extracted from a plurality of the location update messages to produce location-area related information, and
-- outputting the location-area related information.

The location-area related information may comprise the identification of the cells making up a location area. In this case, the location-area related data extracted from a location update message will comprise the current cell and location area of the mobile station that sent the message.

Alternatively or additionally, the location-area related information may comprise the identification of which location areas are adjacent each other. In this case, the location-area related data extracted from a location update message will comprise the old and new location areas of the mobile station that has sent the message upon changing location areas.

Again, the location-area related information may alternatively or additionally comprise the identification of which location areas are responsible for the most location update messages. In this case, the location-area related data extracted from a location update message comprises the current location area of the mobile station that sent the message, and the method further involves maintaining a count of such messages for each location area on which data is extracted.

Yet another possibility is that the location-area related information alternatively or additionally comprises the identification of the particular cells in a specific location area that constitute the primary gateway cells for entry to the location area. In this case, the location-area related data extracted from a location update message will comprise the current cell and location area of the mobile station that sent the message, and the method further involves maintaining a count of such messages for each cell of the specific location area concerned.

Preferably, the location update messages are monitored across the system to extract for each monitored message the current cell and location area of the mobile station that sent the message, a check then being made that no cell is associated with more than one location area.

Where the mobile radio system is a GSM-type system, the location update messages are advantageously monitored on at least one 'A' interface between a Base Station Subsystem BSS and a Mobile Switching Center MSC. Preferably, the location update messages are monitored across the system on the 'A' interfaces associated with all MSCs. In this case, the method may further involve:
-- determining from the location update messages monitored on the 'A' interfaces, the current location area of the mobile station that sent the message;
-- associating the location area determined for each monitored message with the MSC associated with the 'A' interface on which the message was monitored;
-- checking that no location area is associated with more than one MSC.

### Brief Description of Drawings

A monitoring method, according to the invention, for deriving location-area-related information in a cellular mobile radio network, will now be described, by way of non-limiting example, with reference to the accompanying drawings, in which:
- Figure 1: is a block diagram showing the main components of a GSM cellular mobile radio system;
- Figure 2: is a diagram illustrating the relationship between radio cells and location areas in the Figure 1 system;
- Figure 3: is a diagram illustrating the layered format of messages used to carry location update requests in the Figure 1 system;
- Figure 4: illustrates the composition of a "Layer 3 Information" information element carried by the Figure 3 message;
- Figure 5: illustrates the composition of a "Cell Identifier" information element carried by the Figure 3 message; and
- Figure 6: is a diagram illustrating the processing of information extracted from location update request messages for the purpose of deriving location-area-related information.

### Best Mode for Carrying Out the Invention

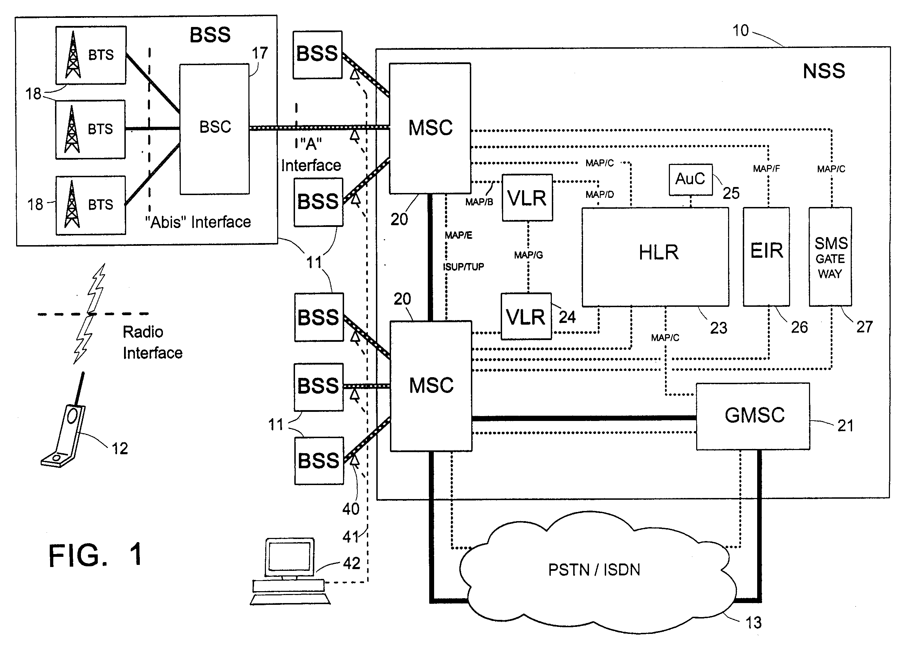

Figure 1 is a diagram showing the main elements of a public land mobile network (PLMN) based on digital cellular radio technology; in particular, the Figure 1 network is a GSM network.

The Figure 1 network comprises a network and switching subsystem (NSS) 10 which connects with a plurality of base station subsystems (BSS) 11; the BSS provide radio communication with mobile stations 12 (only one of which is shown in Figure 1). The NSS 10 also communicates with the fixed public network 13 (the public switched telephone network PSTN and integrated digital services network ISDN). Indeed the PLMN can be thought of as an access path to the PSTN/ISDN, though calls may also be wholly contained within the PLMN.

Each BSS 11 comprises a base station controller (BSC) 17, and a plurality of base transceiver stations (BTS) 18 each controlled by the BSC 17. Each BTS 18 has radio transmitters and receivers for providing radio coverage of a local area known as a 'cell'.

Signalling and user data (digitised voice and other digital data such as computer data) pass between each mobile station 12 and the BTS 18 of the cell in which the mobile station is located. As a mobile station moves from one cell to another, control of handover of communication with the mobile station from the BTS of the old cell to the BTS of the new cell, is effected by the BSC.

The radio interface between a mobile station and BTS is standardised within a particular system such as GSM. Similarly, the interface between each BTS 18 and its associated BSC 17, by which user data and signalling are exchanged between these elements, is also generally standardised (in GSM, this interface is known as the 'Abis' interface).

Each BSS 11 communicates with a mobile switching centre (MSC) 20 of the NSS 10, each MSC 20 generally being in communication with several BSS. The interface between a BSS and an MSC is again generally standardised, this interface being known as the 'A' interface in GSM.

In GSM networks, user data and signalling are multiplexed across the radio interface, the 'Abis' interface and the 'A' Interface. However, within the NSS, user data and signalling are handled separately. This is shown in Figure 1 by depicting user-data paths in solid lines and signalling paths in dotted lines; when both use the same path, a solid line with superimposed white dots is used.

In the NSS, the user data is handled by the MSCs and for a given call, the user data will commonly traverse two MSCs 20. Although in Figure 1 the MSCs 20 are shown as directly connected by a solid line, this should be understood merely as showing that user-data traffic can pass between the MSCs; in practice, whilst a direct connection is used where justified by traffic levels, MSCs may be connected through the intermediary of the fixed public network 13.

In addition to the MSCs 20, user data may also be handled in the NSS by what in GSM parlance is known as a gateway MSC (GMSC) 21. The purpose of the GMSC 21 is to handle calls directed to mobile stations from outside of the PLMN, the GMSC determining where the call should be routed to catch up with the mobile station. In practice, GMSC functionality is often provided at each MSC.

The remaining components of the NSS 10 are concerned with control functions and these components communicate with each other, with the MSCs and GMSC, and with the fixed public network through signalling links using a signalling system generally based on the SS7 ( CCITT Signalling System No.7) standard. Within the NSS 10 a GSM system uses the MAP (Mobile Application Part) protocols for non-circuit-related signalling traffic and the TUP (Telephone User Part) and ISUP (ISDN User Part) for circuit-related signalling traffic. Again, the signalling paths between components of the NSS 10 are not necessarily direct but will generally make use of the SS7 network associated with the fixed public network.

The components of the NSS not already described are:
- the Home Location Register (HLR) 23 - this contains information about subscribers registered with the PLMN (such as the services available to a particular subscriber and the PLMN network address of the MSC where the subscriber is currently located);
- the Visitor Location Register (VLR) 24 - generally, each MSC has its own associated VLR which holds both subscriber data about users currently visiting the area covered by the MSC, and data about the current location of each user within the MSCs coverage area;
- the Authentication Register (AuC) 25 - this component is closely associated with the HLR and holds data providing for subscriber identification and encryption of calls;
- the Equipment Identify Register (EIR) 26 - this stores information about the mobile stations 12 themselves;
- the SMS Gateway 27 - in GSM, a special "Short Message Service" is available, this being provided through the SMS Gateway.

Three main control functions may be identified in regulating calls in the PLMN (the signalling traffic being the communication required to implement these functions). These three functions are:
- **radio resource management** - this is the task of establishing, maintaining and releasing stable connections between mobile stations and an MSC despite movements of a mobile station. This management function primarly involves the BSCs but also the BTSs and MSCs.
- **mobility management** - this is the task of maintaining up-to-date user location information so as to permit incoming calls to be routed to the appropriate mobile station; in GSM, the address of the MSC in the area of which a user is to be found, is stored in the user's HLR whilst the user's location within that area is held in the VLR associated with the MSC. This management function involves the MSCs/VLRs and the HLR.
- **call management** - this task involves, as well as the usual control of calls as found in the fixed public network, the routing of calls towards a mobile station when the location of the latter is initially not known. In GSM, for calls towards a mobile station from outside of the PLMN in which the user of the mobile station is registered, it is the task of the GMSC to find out from the home HLR of the user being called, where that user is and then appropriately route the incoming call. The call management function involves the MSC/VLR, HLR and GMSC.

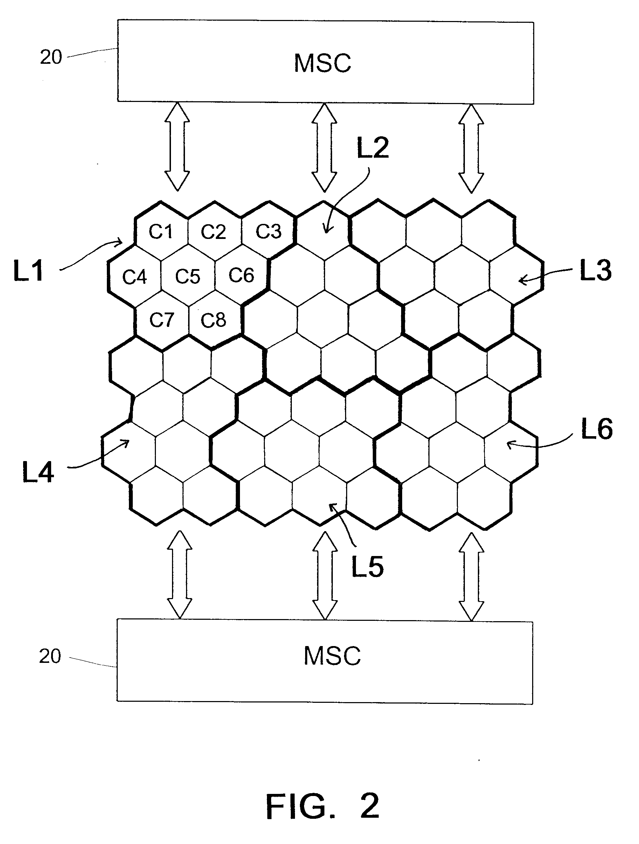

Turning now to Figure 2, this Figure shows a pattern of hexagonal cells each representing a corresponding radio cell, that is, the coverage area of a BTS (assuming that each BTS only covers one area). In Figure 2 only eight cells have been specifically labelled, these being cells C1 to C8.

Groups of physically adjacent radio cells are logically associated, the resultant coverage areas being referred to as "location areas". Thus, cells C 1 to C 8 are grouped together and cover a location area L1. In Figure 2, six location areas L1 to L6 are shown.

In GSM systems, the cells associated with each MSC (that is, the cells associated with the BTSs of the BSSs connected to the MSC concerned) are divided into one or more location areas with the only limitation being that no location area can contain cells associated with more than one MSC. Thus, in Figure 2 the cells associated with the upper MSC 20 form three location areas L1 to L3, whilst the cells associated with the lower MSC 20 form a further three location areas L4 to L6.

It is worth nothing that the GSM standards do not themselves require that all the cells associated with a particular BSS 11 are in the same location area but this will often be the case.

The purpose of grouping cells into location areas is to facilitate the task of mobility management. In order for a mobile station to be located to receive an incoming call, two basic approaches are possible. Firstly, a paging message could be transmitted in every cell of the PLMN in order to have a searched-for mobile station respond to identify its position; such an approach is, however, very inefficient. The second approach is to have the PLMN store location information on each user which is periodically updated as the user (or rather, his mobile station) moves around the network. This latter approach is the one most usually taken. However, if a location update is effected every time a mobile station moves from one cell to another, a very large amount of signalling traffic would be created. In order to avoid this problem, GSM uses the concept of a location area with a mobile station only initiating a location update when it determines it has changed location area. Since the PLMN now knows the location area of each mobile station, when it is necessary to route an incoming call to a particular mobile, it is only necessary to transmit a paging message in the cells of the relevant location area.

As previously indicated, location information is actually stored in two parts with the address of the MSC in whose area a mobile station is currently located being stored in the HLR, and the local location information (that is, current location area) being stored in the VLR associated with that MSC.

A mobile station can tell when it has changed location area because the BTS of each cell periodically transmits the identity of the cell and location area in which it is located; by storing this location area information, the mobile station can readily tell when it changes location area.

Upon detecting a location area change, the mobile station transmits a "location update request" which is received by the BTS of the cell in which the mobile station is currently to be found. This request is then passed via the BSC associated with the BTS, back to the relevant MSC. The MSC then updates the location information held for the mobile station in the VLR associated with the MSC. In the event that a mobile station moves from a location area covered by one MSC to a location area covered by another MSC, a changeover process is effected between MSCs which also involves the HLR being updated with the address of the MSC into whose area the mobile station has now moved.

A mobile station is also arranged to send out a location update request message, if it receives an indication from the network that it is not known to the VLR in whose coverage area it is currently located.

Finally, in order to ensure that up-to-date location information is maintained on mobile stations, and also to enable the databases in the HLR and VLR to be rebuilt in case of data loss, each mobile station is arranged to send a location update request message (a "periodic" location update request) if it has not sent such a request within a predetermined, network configurable, amount of time.

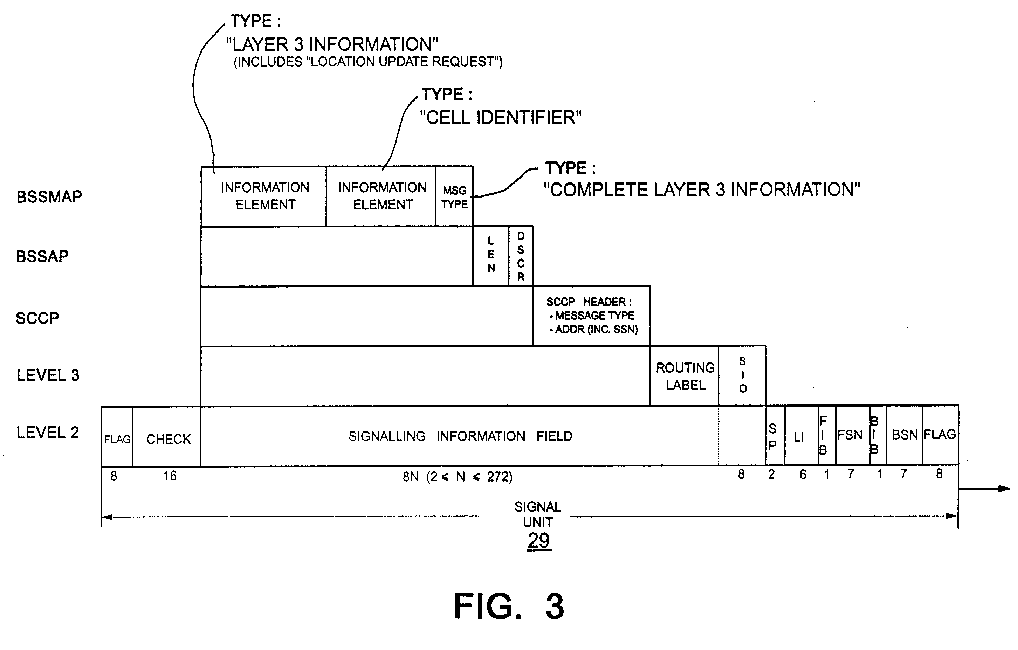

For whatever reason a location update request is generated, it results in the appearance of a corresponding message on the 'A' interface between the BSC and MSC concerned. Figure 3 show the format of this message in a GSM system,
For messages on the 'A' interface, the SS7 SCCP (Signalling Connection Control Part) and underlying MTP (Message Transfer Part) provide the transport service. More particularly, information is transported in MTP level 2 signalling units, the composition of which is:
Flag Field (8 bits);
Backward Sequence Number BSN (7 bits);
Backward-Indicator bit BIB (1 bit);
Forward Sequence Number BSN (7 bits);
Forward-Indicator bit BIB (1 bit);
Length Indicator LI (6 bits);
Spare SP (2 bits);
Service Information Octet SIO (8 bits);
Signalling Information Field SIF (8n bits);
Check Field (16 bits);
Flag Field (8 bits).
MTP level 3 information is contained in the SIO and in a routing label forming part of the level 2 signalling information field. The routing label includes source and destination addresses for the signalling unit in terms of point codes. Above MTP level 3 is the SCCP layer for carrying information according to a required service type (connectionless or connection-oriented); the SCCP header information relates to provision of this service as well as including further addressing information that, inter alia, specifies what is termed a "subsystem number" for identifying the user of the transport service provided by the SCCP. In the present case, the user is the Base Station Subsystem Application Part (BSSAP) peer-to-peer protocol operating between the BSS and MSC concerned. BSSAP messages are identified by a subsystem number of "FE" in hex.

BSSAP is sub-divided into two parts, each BSSAP message being associated with one or other part as indicated by a discriminator octet (DSCR in Figure 3). These two parts are:
-- BSS Management Application sub-part (BSSMAP) which is used for radio resource (RR) and BSC management; and
-- Direct Transfer Application sub-part (DTAP) which is used for the transfer of call control (CM) and mobility management (MM) messages.

Location update requests are related to mobility management and it might therefore be expected to find such requests embedded in DTAP messages. In fact, location update requests are embedded in BSSMAP messages. The reason for this is that each location update request requires the establishment of a new radio connection between the mobile station concerned and the relevant MSC, and the establishment of such a connection is a radio resource management issue. Indeed, whenever a new radio connection is established, the "initial message" concerned with that connection is piggy-backed onto the RR message on the 'A' interface involved in setting up the connection through to the relevant MSC. More particularly, the BSSMAP message "Complete Layer 3 Information" is used to carry initial messages. Now, since the "initial message" associated with the making of a location update request is that request itself, the location update requests are to be found embedded in BSSMAP "Complete Layer 3 Information" messages, these latter being indicated by a message type octet '01010111' (the rightmost bit being the first bit of the octet).

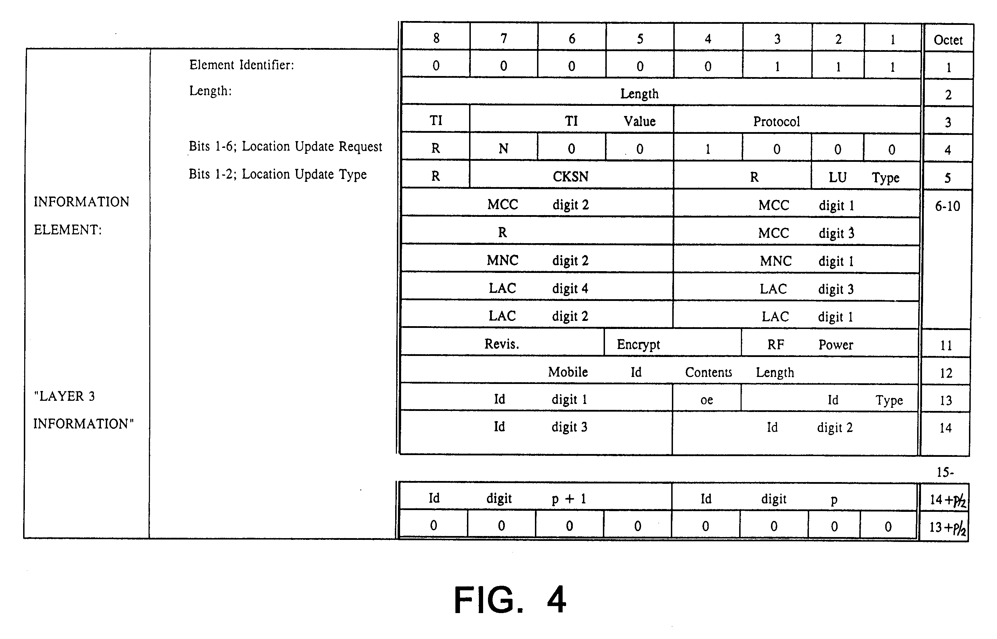

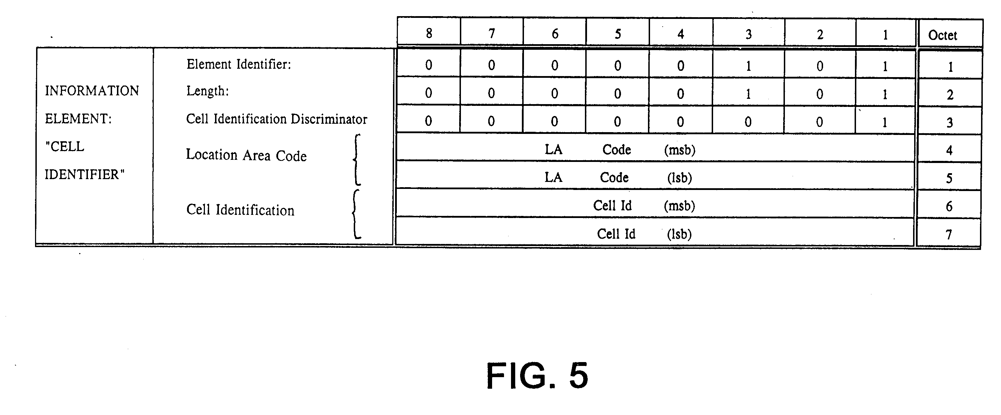

Each "Complet Layer 3 Information" message comprises two information elements, namely:
-- Cell Identifier;
-- Layer 3 Information;
the contents of which are shown in detail in Figures 5 and 4 respectively in the case of a location update request being carried by the "Complete Layer 3 Information" message. For each information element, the first octet identifies the type of the information element whilst the second octet gives its length.

It is the "Layer 3 Information" information element that actually contains the location update request, this being indicated in bits 1 to 6 of octet 4 (see Figure 4). The location update type is contained in bits 1 and 2 of octet 5 ('LU Type') and is used to distinguish normal location update requests resulting from a change in location area by a mobile station (LU Type ='00'), from a periodic location update request caused by a timeout in the mobile station (LU Type = '01').

For present purposes, the location-area related data of interest is:
-- the current cell of the mobile station making the location update request (octets 6 and 7 of the "Cell Identifier" information element);
-- the new location area of the mobile station (octets 4 and 5 of the "Cell Identifier" information element); and
-- the old location area of the mobile station (octets 9 and 10 of the "Layer 3 Information" information element).

In accordance with the present invention, the messages carrying location update requests are monitored to extract cell and location area (old and new) data. In the embodiment shown in Figure 1, a respective SS7 monitor 40 is used to monitor each 'A' interface for the purpose of detecting location update requests and extracting cell and location area related data from each such request. The details of how such data can be identified and extracted will be apparent to persons skilled in the art, particularly having regard to the explanation given above about where location update requests are to be found. However, in general terms, the following steps will be followed:
(1) - "Complete Layer 3 Information" BSSMAP messages are detected by examining the SCCP subsystem number to identify BSSAP messages, then the discriminator of each BSSAP message to identify BSSMAP messages, and finally the message type of each BSSMAP message to identify "Complete Layer 3 Information" messages.
(2) - the information element content of each "Complete Layer 3 Information" message is checked to ensure these elements are "Cell Identifier" and "Layer 3 Information".
(3) - the "Layer 3 Information" information element is checked to see if it relates to a location update request and if it does, the type of this request is noted.
(4) - where a location update request is identified, the data concerning the current cell and current (new) location area of the mobile station making the location update request, is extracted from the "Cell Identifier" information element, and the data concerning the old location area of the mobile station is extracted from the "Layer 3 Information" information element.

The location-area related data extracted from each location update request is processed locally by each probe 40 and the resultant processed information is periodically downloaded over a network 41 (such as the operations and management network associated with the main network) to a central workstation 42 where further processing is carried out. Indeed, all processing of the extracted location area related information could be effected by the workstation 42.

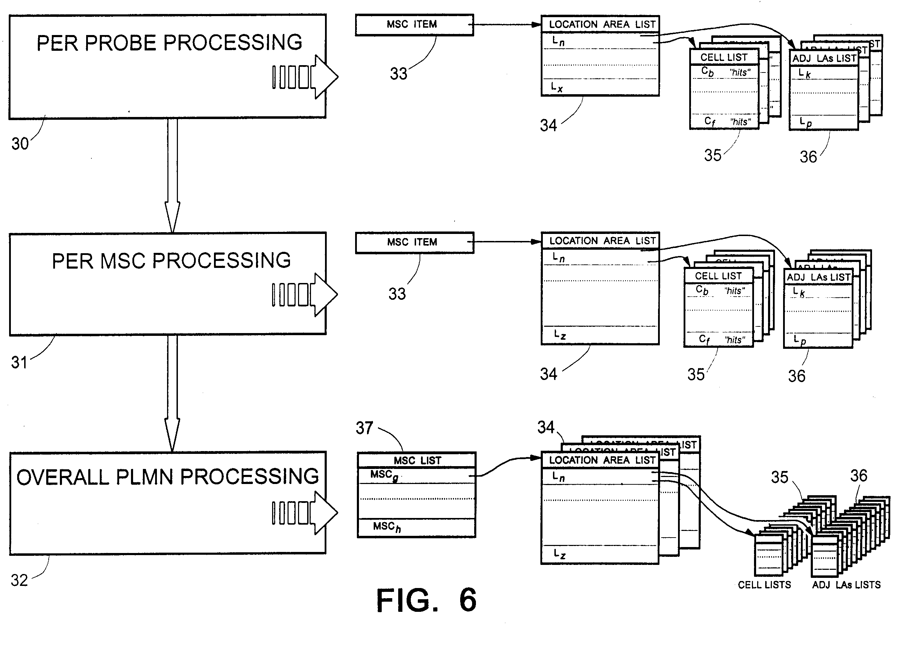

The main phases and data structures involved in processing the location-area related data are illustrated in Figure 6.

The first processing phase is a 'per probe' phase carried out on the data extracted by each probe (either by the probe 40 itself or by the workstation 42). The main data structures involved in this processing phase are:
-- an MSC item 33 containing an identifier of the MSC associated with the 'A' interface monitored by the probe (this identifer may be programmed in by an operator or automatically derived by the monitor by reading the destination point code for the signal units carrying the location update requests).
-- a location area list 34 containing an entry for each current (new) location area (Lₙ ... Lₓ) identified in the location-area related data extracted by the probe 40; this list 34 is pointed to by the MSC item 33, the location areas identified in the list being those associated with the MSC identified in the MSC item 33.
-- for each location area identified in the location area list 34, a respective:
   -- cell list 35 identifying the cells (C_{b} ... C_{f}) associated with that location area (a cell is considered associated with a location area if the location area is the current location area contained in the "Cell Identifier" information element identifying the cell); for each cell in the cell list 35, a count is maintained of the number of location update requests made with that cell identified as the current cell (this is the "hits" count in Figure 6).
   -- adjacent location-area list 36 identifying the location areas (Lₖ ... Lₚ) found to be adjacent the location area concerned; a location area is considered to an adjacent one when it forms the "old" location area in a normal location update request for which the "new" location area is the one of interest.
   Each location area entry in the location area list 34 contains pointers to its associated cell list 35 and adjacent location areas list 36.

During the 'per probe' processing phase, as new data is extracted from each location update request monitored by a probe 40, the data is analysed to see if it identifies a new location area not previously identified in the list 34 maintained for the probe - if it does, a new entry is added to the list 34. The cell associated with the identified location area is then examined and if this cell is not already present in the cell list 35 associated with the location area concerned, a corresponding new entry is made in list 35 with a "hits" count of one; if the cell is already known, its "hits" count in list 35 is incremented. Where an "old" location area is identified in the extracted location-area related data, this location area is added to the adjacent location area list 36 for the location area concerned unless a corresponding entry already exists.

The second main processing phase is a 'per MSC' processing phase 31 carried out by workstation 42; in this phase the data collected from all the probes associated with a particular MSC, are combined. The main data structures involved in the phase are the same as for the 'per probe' processing phase, the 'per MSC' phase being primarily an aggregation of the data from multiple lists 34, 35 and 36 for a particular MSC into single lists 34, 35 and 36 for that MSC with the elimination of duplicate entries and the adding together of the cell "hits" counts for any cell which previously appeared in more than one list 35. The MSC item 33 is used to identify the groups of lists 34, 35 and 36 that need to be combined to consolidate the information for each particular MSC.

At this stage, since each location area in a GSM system should only contain cells associated with one MSC, all available information on the cell composition of each location area contained in a list 34 for a particular MSC, will have been collected and will be contained in the corresponding cell list 35. However, there is no guarentee that all cells of a location area will have been involved in a location update request during the period of monitoring by the relevant probes. This is particularly the case in respect of any cells ('internal' cells) not located at a boundary of the location area concerned, for such internal cells will not be involved in normal location update requests, there being no change in location area when such a cell is entered from an adjacent cell. An internal cell may nevertheless feature in the cell list 35 of a location area if a periodic location update request has been issued by a mobile station from that cell. With the above caveat, the cell list 35 for each location area associated with a particular MSC may be output as the cell composition of that location area.

The information contained in the cell lists 35 after the 'per MSC' processing phase will also provide an indication, from the "hits" count associated with each cell entry, of which cells are the ones mostly involved in location update requests - that is, are the ones through which the location areas concerned are mostly entered. The identity of, for example, the top three such cells ('gateway' cells) for each location area may be identified and output.

Although the 'per MSC' processing does not itself involve combining data from location areas associated with different MSCs, the adjacent location areas list 36 for each location area associated with a particular location area should be complete after the 'per MSC' processing phase. The lists 36 can therefore be output to identify the adjacent location areas for each location area of an MSC.

The third processing phase involves the consolidation of the lists 34, 35 and 36 collected for all MSCs in the overall system. This consolidation involves forming a list 37 of MSCs, each entry corresponding to a respective one of the MSC items 33 and including a pointer to the location area list 34 relevant to the MSC concerned.

From the consolidated system-wide location area information contained in the lists 34 to 37, it is possible to ascertain which location areas are most utilised by adding up the "hits" counts for the cells of each location area and identifying the location areas with the highest "hits" counts.

Using the information contained in the lists 34 to 37, it also possible to carry out various consistency checks. For example, it is possible to arrange for the workstation 42 to check that no cell appears in more than one list 35 (a cell should only be associated with one location area); if this check shows that a cell occurs in more than one list 35, then an alarm is generated. The workstation 42 may also be arranged to check that no location area is associated with more than one MSC as would be the case if it contained cells associated with more than one MSC; again, detection of an anomoly can be arranged to generate an alarm.

Various modifications are, of course, possible to the above described monitoring method for deriving location-area related information. Additionally, the monitoring method can be applied to any appropriate cellular radio system and is not restricted in application to GSM-type systems.

## Claims

1. A monitoring method for a cellular mobile radio system that comprises a fixed part providing radio coverage in a plurality of cells logically grouped into location areas, and mobile stations for communicating with said fixed part of the system, each mobile station being operative to pass location update messages to said fixed part at least upon changing location areas; said method involving:
-- monitoring said location update messages to extract location-area related data from each of at least some of said messages,
-- combining said location-area related data extracted from a plurality of said location update messages to produce location-area related information, and
-- outputting said location-area related information.

2. A monitoring method according to claim 1, wherein said location-area related data extracted from a said location update message comprises the current cell and location area of the said mobile station that sent the message, said location-area related information being the identification of the cells making up a said location area.

3. A monitoring method according to claim 1, wherein said location-area related data extracted from a said location update message comprises the old and new location areas of the said mobile station that has sent said message upon changing location areas, said location-area related information being the identification of which location areas are adjacent each other.

4. A monitoring method according to claim 1, wherein said location-area related data extracted from a said location update message comprises the current location area of the said mobile station that sent the message, said method involving maintaining a count of such messages for each location area on which data is extracted, and said location-area related information being the identification of which location areas are responsible for the most location update messages.

5. A monitoring method according to claim 1, wherein said location-area related data extracted from a said location update message comprises the current cell and location area of the said mobile station that sent the message, said method involving maintaining a count of such messages for each cell of a said location area, and said location-area related information being the identification of the cells in that location area that constitute the primary gateway cells for entry to the location area.

6. A monitoring method according to claim 1, wherein said location update messages are monitored across said system to extract for each monitored message the current cell and location area of the mobile station that sent the message, a check then being made that no cell is associated with more than one location area.

7. A monitoring method according to claim 1, wherein said mobile radio system is a GSM-type system and said location update messages are monitored on at least one 'A' interface between a Base Station Subsystem BSS and a Mobile Switching Center MSC.

8. A monitoring method according to claim 7, wherein said location update messages are monitored across said system on the 'A' interfaces associated with all MSCs, said method including:
-- determining from said location update messages monitored on said 'A' interfaces, the current location area of the mobile station that sent the message;
-- associating the location area determined for each monitored message with the MSC associated with the 'A' interface on which the message was monitored;
-- checking that no said location area is associated with more than one MSC.
